# EUROPEAN PATENT APPLICATION

(11) **EP 0 752 765 A2**
(43) Date of publication of application: **08.01.1997**
(21) Application number: 96304769.1
(22) Date of filing: 28.06.1996
(51) Int. Cl.: H04B 7/26

(54) **A wide-band application based upon a narrow-band TMDA system**

(30) Priority: 03.07.1995 FI 953282
(71) Applicant: NOKIA MOBILE PHONES LTD., 24101 Salo (FI); NOKIA TELECOMMUNICATIONS OY, 02601 Espoo (FI)
(72) Inventor: Jokinen, Harri, 25370 Hiisi (FI); Honkasalo, Zhichun, 01660 Vantaa (FI); Malkamäki, Esa, 02130 Espoo (FI)
(74) Representative: Slingsby, Philip Roy

(57) **Abstract**

The invention relates to the formation of a wide-band data transfer link (WB) as an extension to a data transfer system, which comprises narrow frequency bands (f2) for the organization of narrow-band data transfer calls using one frequency band. In accordance with the invention the data stream (S) which is to be trans-mitted is divided into substreams (S5 - S9), each of which modulates a different frequency band (f5 - f9). The signals thus obtained are combined (C) for trans-mission. The received signal is divided into frequency bands, which are de-modulated separately, and from the data substreams thus obtained the original data stream is reconstructed. The wide-band communication in accordance with the invention (WB) may further be divided among many users on the principle of time or frequency-division multiple access.

## Description

The invention relates in general to the organization of high speed data transfer across a radio interface and in particular to the formation of a wide-band transmission link as an extension to some current system which is based upon a narrow-band link.

Digital cellular networks and mobile means of communication which operate therein are fast creating a major worldwide system for the transfer of information in electrical form from one user to another. The greater the variety of applications which are developed for linking these systems, the greater the need for the development of higher data rate transmission methods.

Current second-generation digital cellular network systems, such as GSM (Groupe Spéciale Mobile), have been designed to offer mainly narrow-band services, such as voice transmission and data transmission at the rate of 9.6 kbit/s. The basic parameters of the system, such as channel spacing and the operation of a time-division multiple access (TDMA) system, have been optimized having regard to these relatively slow services. New data transfer services, however, which will probably be demanded of future data transmission networks, require for their operation a better transmission capacity, and in particular a greater bandwidth. The time-division multiple access system, which for the sake of brevity will be referred to below as the TDMA system, has proved such an effective concept in the sharing of resources among a large number of users, that it is also likely to be applied in future.

In order to illustrate the background to the invention we will give a brief account of the basic parameters of the GSM system radio interface. The GSM system is based upon time-division multiple access and for radio traffic two 25 MHz frequency bands are reserved - 890-915 MHz for transmission by mobile communications means and 935-960 MHz for reception. These frequency bands are divided into 124 frequency channels, spaced by 200 kHz. In accordance with the principles of TDMA, each frequency channel is divided into 8 time slots. Each mobile telephone is allocated one time slot for sending and reception, so that one frequency channel may have 8 telephones at the same time. Communication by radio occurs in bursts at the said time slots, each burst being transmitted in its own time slot. At a GSM system transfer rate of 271 kbit/s one obtains a 156.25-bit burst over a length in time of 577 µs, in which case the length of a TDMA frame containing 8 time slots is 4.615 ms. A mobile telephone thus has transmission for 0.577 ms of each 4.615 ms TDMA frame.

The familiar method for achieving a greater transfer rate with the TDMA system is the selection of frequency bands for the radio channels which are wider than the 200 kHz mentioned in the above GSM system. The characteristic drawbacks of this method compared with a more narrow-band system are the greater transmission capacity required in order to achieve the same signal-to-noise ratio and the need for a more sophisticated equalization function for reception, so that the effect of frequency-dependent delay and attenuation phenomena can be balanced.

Since all users do not need a wide-band communication facility, it is proposed as a compromise that the system should comprise radio channels of two different width in terms of frequency. Narrow-band transmission may be employed in areas of wide coverage where the need for transmission capacity and the occurrence of delay phenomena due to multipath propagation are at their greatest, while the high speed wide-band facility could be offered in small areas where the signal propagation characteristics fluctuate within narrow limits. An example of such a system is the so-called Advanced TDMA project (ADTMA), which is being developed throughout Europe in the RACE (Research and Development in Advanced Communications Technology in Europe) programme as part of the new universal wireless data transfer network - Universal Mobile Telecommunication System (UMTS).

The object of the above-mentioned system, which is still in the experimental stage, is to transmit a normal voice- or slow data transfer call between a mobile terminal and a fixed base station using a single narrow frequency band in the same way as in current systems. When the user or rather his terminal asks the system for a call of faster transmission, a certain wider frequency band is put into use. The modulator component of each sender device participating in the data transfer call or link in question then increases the depth of modulation which it employs so that a greater data transfer rate is achieved using the wider frequency range. The modulation method itself is apart from the greater modulation depth the same in wide-band data transfer as in the normal narrow-band alternative.

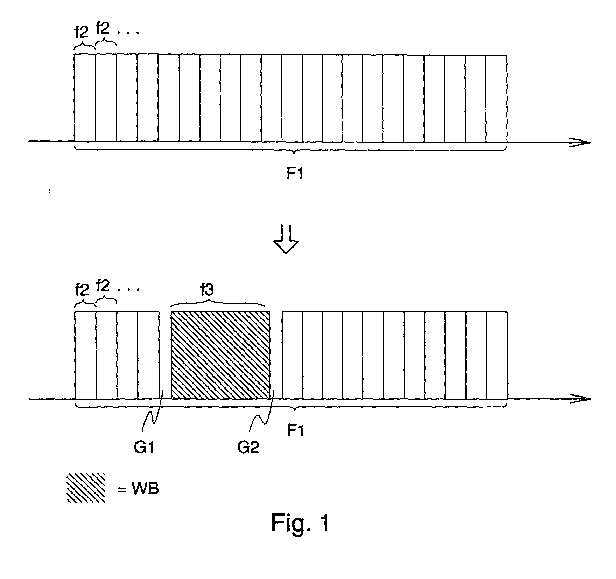

The disadvantage of the proposed method is that, since the modulation method is the same for both narrow and wide-band data transfer, a wide-band RF carrier produces a wider leakage signal, measured in Hertz, to frequencies adjacent to the actual data transfer band. So that the leakage signal does not disturb other simultaneous calls, it is necessary to leave around the wide data transfer band guard bands or frequency ranges which are not available to anyone for data transfer. The leaving of unused frequency bands improves the coefficient of utilization of the frequency spectrum or the relation of the frequencies in useful operation to the width of the frequency range reserved for the whole system. Figure 1 shows a situation where the system's frequency range which is in use, F1, is first divided at even intervals into narrow-band radio channels f2 and when some terminal has requested high speed data transfer, a wider frequency range f3 is allocated for a corresponding wide-band call. The hatching indicates that this frequency range is being used by the wide-band service WB. On either side of it are guard bands G1 and G2, the frequencies of which may not be used simultaneously for any useful data transfer.

An object of this invention is to provide a method which facilitates high speed data transfer across a radio interface. Another object of the invention is also to provide a procedure whereby a system based on narrow-band data transfer may be used as a basis for a more wide-band organization of data transfer with a favourable coefficient of utilization of the frequency spectrum.

The objectives of the invention can be attained, in one apsect, by the formation of a wide-band RF signal by combining several narrow-band RF signals.

A characteristic of the procedure according to this invention is that, in order to transmit a stream of data from the sender device to the receiver device, one divides the said data stream in the said sender device into substreams and uses a certain first modulation method for applying data contained in each substream to a separate frequency band and one combines the radio frequency signals thus obtained by application as a temporary superposition for transmission from the said sender device to the said receiver device.

This invention is also concerned with the sender- and receiver apparatus for carrying out the said method. A characteristic of the sender equipment according to this invention is that it comprises equipment for division of the said data stream into substreams and equipment for applying the data contained in each substream by modulation to a separate radio frequency oscillation and equipment for the combining of radio frequency signals thus obtained for transmission to the said receiver equipment. It is a characteristic of the receiver equipment according to this invention that, for the purpose of receiving a radio frequency transmission, it comprises equipment for division of the received transmission into different frequency bands and equipment for decoding of the data applied to each said frequency band into data substreams by demodulation and equipment for combining of the said data substreams for reconstruction of the data stream conveyed by the said radio frequency transmission.

The invention is based upon a concept according to which the capacity of a plurality of narrow-band radio channels may be combined by using them simultaneously for transmission of different parts of the same signal. A combination of several narrow-band channels may be designated a functionally wide-band radio channel. The data which is to be transferred, which may in the transmission phase be regarded as a data stream, are divided into substreams, each of which is applied by modulation to a single narrow-band radio carrier. The narrow-band radio signals produced by modulation for the purpose of radio frequency processing necessary for transfer, such as amplification, sending and receiving, are then combined. After transfer they are again separated by the receiver, each substream being separable by means of demodulation from its own narrow-band radio carrier. After demodulation, the substreams are combined to form a reconstruction of the entire data stream transferred.

Previously it was considered that the simultaneous use of several narrow-band channels demanded the employment of RF components for each channel both on sending and on receiving, which would mean that the equipment would become highly complex and expensive to manufacture. In the research which led to the present invention, however, it has been found that it is possible to divide the operation corresponding to wide-band modulation into parallel modulation blocks, each of which corresponds in structure and function to a single modulator in a normal narrow-band system. Applying the same principle, the wide-band demodulator may be composed of parallel narrow-band demodulation blocks. The leakage signal to adjacent frequencies which occurs as a result of the wide-band data transfer mode provided by the method according to this invention is essentially of the same magnitude as the leakage signal caused by normal narrow-band data transfer. Consequently, guard bands are not required and the coefficient of utilization of the frequency spectrum is significantly higher than in technical solutions according to the prior art.

The invention will now be described in greater detail in terms of a favourable embodiment, with reference to the attached drawings, where
- Figure 1: shows the known method for the realization of wide-band data transfer in a narrow-band system,
- Figure 2a: is a block diagram of the modulator component of a known sender device,
- Figure 2b: is a block diagram of the modulator component of a sender device according to this invention,
- Figure 3: shows division of the frequencies according to the first embodiment of this invention, and
- Figure 4: shows division of the frequencies according to the second embodiment of this invention.

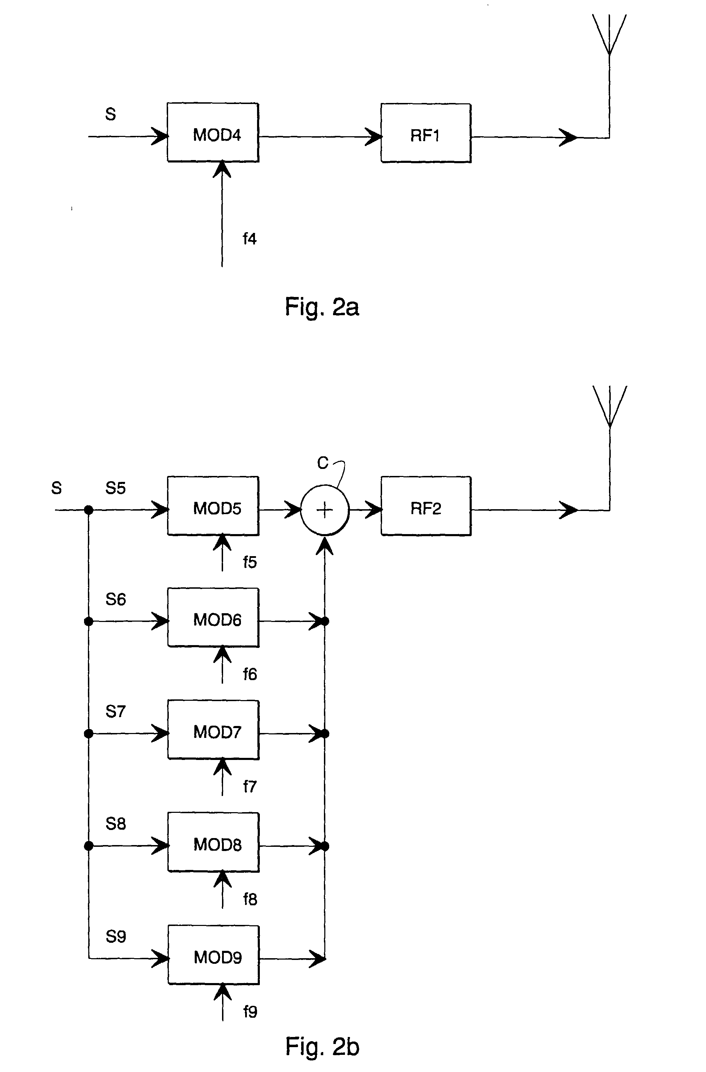

In the above explanation of the prior art reference was made to Figure 1; in the following section reference is primarily made to Figures 2a - 4. In the drawings, the same reference numbers are used for parts having similar functions.

Figure 2a shows the known arrangement, in which a single modulator block MOD4 is employed for modulation of the carrier f4. The carrier is modulated in the block MOD4 on the basis of the data to be transferred S, after which the radio frequency signal is directed to the block RF1 containing radio frequency components such as amplifiers. In this known arrangement the depth of the modulation procedure carried out by modulation block MOD4 or the number of possible modulation steps is varied according to how great a data transfer rate is desired and how great a bandwidth is available. The modulation procedure itself remains the same all the time, which leads to the known disadvantages which are explained above in connection with the prior art.

Figure 2b shows the arrangement according to this invention, in which the modulation operation is divided into functionally parallel blocks MOD5 - MOD9, each of which is itself similar to the narrow-band system modulator block MOD4 according to the prior art. The data stream S which is formed from the data for transfer is, before modulation, divided into substreams S5 - S9 and each substream is fed to one of the parallel modulator blocks MOD5 - MOD9, in which the carrier f5 - f9 is accordingly modulated on arrival at the relevant modulator block. The signals obtained from the outputs of modulator blocks MOD5 - MOD9 are, as shown in Figure 2b, combined in the combiner C, effecting temporal superposition of the narrow-band-modulated subsignals, which are fed to radio frequency block RF2. By temporal superposition is meant simply that the said signals are summated, as indicated by the + signal in the combiner C. The frequency limits of the superposition signal are as pronounced as the frequency limits of the individual ordinary narrow-band signal; in other words, the leakage signal to the adjacent frequencies which are not involved in the wide-band data transfer according to the invention, is essentially as great as in narrow-band data transfer in accordance with the prior art.

The parallel modulator blocks MOD5 - MOD9 shown in Figure 2b are not necessarily physically separate components. In a particularly favourable embodiment of the invention these have, along with the superposition of subsignals effected by combiner block C, been realized as functional programmatic processes in digital signal processors.

Generation of the subfrequencies f5-f9 obtained as input signals of the modulator blocks MOD5 - MOD9 occurs in the same way as in radio communication means in known technology which are intended for narrow-band communications, with the difference that in the method according to the invention the subfrequencies are generated several at a time. The design of programmatic processes to be performed as a suitable series of tasks by a digital signal processor is in itself technology familiar to skilled workers in the field.

At the block diagram level, the receiver device according to the invention is in principle the same as the sender device explained above with reference to Figure 2b, except that the direction of signal travel is opposite and in place of modulators MOD5 - MOD9 there are demodulators. The design of the radio frequency components which form the RF parts RF2 of the sender device according to the invention and the RF parts of the receiver device according to the invention (not shown in the drawings) is in itself of known technology and does not therefore pose difficulties for an expert in the field. In the receiver device, too, a particularly favourable embodiment of the invention has the necessary division- and demodulation operations carried out by the digital signal processor as programmed commands, just as in the sender device described above with reference to Figure 2b.

Next, the choice of subfrequencies in the method according to this invention will be dealt with. Since the idea underlying the invention is to provide wide-band data transfer as an extension to a current network offering narrow-band services by combining the narrow frequency bands thereof, it is natural that the bandwidth of the wide-band service should be an integral multiple of the bandwidth of the narrow-band service. From the standpoint of the invention it is not important how many narrow frequency bands are contained in the wider frequency band, but by way of example it has been estimated that, when a procedure according to the invention is applied to a GSM-type system, five narrow frequency bands would be a suitable number. The data transfer capacity of the wide-band service would then be at least five times that of the narrow-band service. "At least" means that by omitting some control data structures for each frequency and by using the capacity thus released for transmission of the actual data for transfer, an even greater benefit may be achieved.

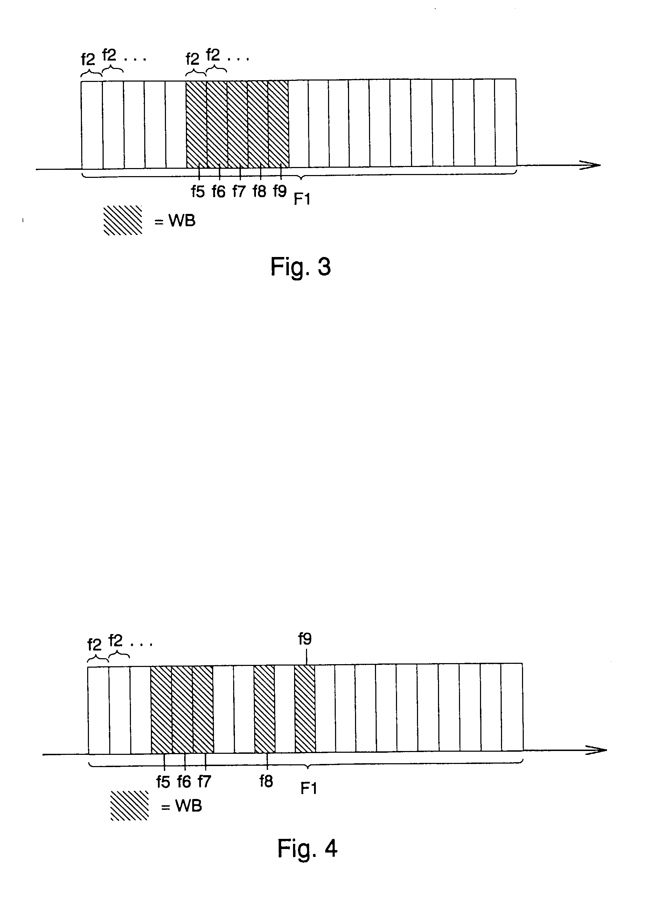

Figure 3 shows the first alternative for the frequency selection. The five narrow frequency bands mentioned there, which have been marked with hatching and which together form the wide band WB, have been chosen so that they are situated adjacent to each other on the frequency axis. With such an arrangement the hardware requirements are at a minimum, since the difference between the maximum and minimum frequencies to be handled by the sender and the receiver is as small as possible.

Furthermore, the frequency allocation algorithm, which in a mobile telephone switching centre controls the allocation of the frequencies between the individual links, is relatively simple, since a wide-band frequency range may be handled as a single entity defined by an upper and lower limit. The frequency bands which form the wide band WB have been designated according to frequency with the same reference symbols f5 - f9 as have been used for designation of the subfrequencies in Figure 2b, so that the connection between them and the modulator blocks is more easily understood.

Figure 4 shows the second alternative for frequency selection. Here, narrow frequency bands belonging to the same wide-band service WB are distributed relatively freely over the system's frequency range F1 and at least some of them are not situated adjacent to each other on the frequency axis. The alternative according to Figure 4 gives more flexibility to the distribution of frequencies and to optimization of the use of resources, and the frequency division according to it may be changed dynamically within a certain coverage range between the simultaneous wide-band and narrow-band services, since the uniformity of the frequency range demanded by the wide-band service need not be retained in the same way as in the alternative according to Figure 3. So that the hardware requirements in terms of radio frequency components such as filters remain moderate, however, it is necessary that the subfrequencies according to the "freely distributed" arrangement according to Figure 4 are relatively close to each other in the RF spectrum.

Although the form of wide-band data transfer in this invention comprises a whole number of narrow-band channels, it is not necessary for the purposes of the invention that all of the capacity thus obtained be reserved for the use of one data transfer call. In the method according to this invention it is possible to incorporate a multipurpose arrangement, which may be based either upon time division (TDMA) or upon frequency division (Frequency Division Multiple Access, FDMA). In the first of these alternatives, the actual radio call time with the formed broad frequency band is divided into cyclically repeated time slots, which are designated for particular wide-band or narrow-band service users in the same way as in the current TDMA procedure with the GSM system. In the latter alternative, or FDMA multidivision, the five narrow frequency bands which are used for wide-band data transfer may further be divided between two, three or four users so that the narrow frequency bands are for example distributed in the quantities 2-3, 4-1, 2-1-2 or 2-1-1-1. In that case, the users who have only one narrow frequency band at their disposal are ordinary narrow-band service users, whereas those who are allocated two or more frequency bands are users of special-level wide-band services.

One of the significant advantages of the invention is that, when dividing the narrow frequency bands belonging to the wide-band service according to this invention in the manner shown above among a plurality of users in accordance with the TDMA or FDMA principle, a user who needs only one narrow frequency band may use one of the frequency bands designated for the wide-band service regardless of whether or not his equipment supports the wide-band service. The method according to the invention is thus applied specifically as an extension to existing systems intended for narrow-band services, since it does not involve any restriction for the use of terminal devices already in operation. In the wide-band system according to the prior art, as shown in Figure 1, a terminal device which only supports the narrow-band service may not employ a part of the the frequency range allocated for wide-band services, since the frequency range is uniform and is not made up of separate narrow bands.

This invention also provides better utilization of the radio frequency spectrum than does the prior art in a situation where in the same frequency range both narrow- and wide-band services are offered, which are situated adjacent to each other on the frequency axis and geographically in the same and/or adjacent coverage areas. The above description deals with a cellular mobile telephone network as an example of a favourable embodiment of this invention. The invention may however be applied to all systems which are based upon narrow-band data transfer services, where there is also a need to offer to the users swifter and more wide-band services.

## Claims

1. A method for the transfer of data, the data for transfer forming a data stream (S), in a data transfer system operating at radio frequency between a sender device and a receiver device, the operating frequency range (F1) of which comprises a plurality of frequency bands (f2) for organization of a data transfer call using a single frequency band, characterized in that in the said sender device the said data stream (S) is divided into substreams (S5, S6, S7, S8, S9) and that a certain first modulation method is used for the application of data contained in each substream to a separate frequency band (f5, f6, f7, f8, f9) and that the radio frequency signals thus obtained by application are combined for transfer from the said sender device to the said receiver device.

2. A method according to Claim 1, characterized in that in the said data transfer system data is also transferred using just the one said frequency band (f2) by applying the data for transfer to the frequency band in question (f2) using a certain second modulation method, the said first modulation method being essentially the same as the said second modulation method.

3. A method in accordance with Claim 1 or Claim 2, characterized in that in the said data transfer system a certain number of the said frequency bands (f2) are reserved for application of the method according to Claim 1 or Claim 2 (WB) and that thereafter the radio call time in the said reserved frequency bands is divided into time slots, certain of which cyclically recurring time slots are reserved for use by a certain first data transfer call and certain other cyclically recurring time slots are reserved for use by a certain second data transfer call, thus providing time-division multiple access for use of the reserved frequency bands in question (WB).

4. A method in accordance with Claim 1, 2 or 3, characterized in that the said data transfer system a certain number of the said frequency bands (f2) are reserved for application of the method according to Claim 1 (WB) and thereafter certain of these frequency bands are allocated for use by a certain first data transfer call and certain other frequency bands for use by a certain second data transfer call, providing frequency-division or time and frequency-division multiple access for use of the reserved frequency bands (WB).

5. A sender device for the purpose of applying data for transfer, in the form of a data stream (S), to a radio frequency oscillation, and for transmission thereof via a data transfer system to a receiver device, characterized in that it comprises equipment for the division of the said data stream into substreams (S5, 56, S7, S8, S9) and equipment (MOD5, MOD6, MOD7, MOD8, MOD9) for applying, by modulation, the data contained in each substream to a separate radio frequency oscillation (f5, f6, f7, f8, f9) and equipment (C) for combining the radio frequency signals thus obtained for transmission to the said receiver device.

6. A sender device in accordance with Claim 5, characterized in that a time-division multiple access procedure is employed in the said data transfer system and that the said sender device additionally comprises equipment for transmission of the combination signal, obtained by combination from the said radio frequency signals, to the said receiver device in certain cyclically recurring time slots, which form part of the time-division multiple access procedure which is to be employed in the said data transfer system.

7. A receiver device for reception of a radio-frequency transmission, which, transmission conveys a data stream via a data transfer system, characterized in that it comprises equipment for division of the received transmission into different frequency bands and equipment for the decoding, by demodulation, of data applied to each said frequency band into data substreams, and equipment for combining the said data substreams for the purpose reconstitution of the data stream conveyed by the said radio-frequency transmission.

8. A receiver device in accordance with Claim 7, characterized in that a time-division multiple access procedure is employed in the said data transfer system and that the said receiver device additionally comprises equipment for reception of the said received transmission in certain cyclically recurring time slots, which form part of the time-division multiple access procedure to be employed in the said data transfer system.

9. A data transfer method in a data transfer system having an operating frequency range (F1) which comprises a plurality of frequency bands (f2) for organization of a data transfer call using a single frequency band, characterized in that a wide-band data stream (S) to be transferred is divided into substreams (S5, S6, S7, S8, S9) and a first modulation method is used for the application of data contained in each substream to one of the plurality of frequency bands (f5, f6, f7, f8, f9) and that the signals thus obtained by application are combined prior to transfer.
